# EUROPÄISCHE PATENTSCHRIFT

(11) **EP 1 593 828 B1**
(45) Veröffentlichungstag und Bekanntmachung des Hinweises auf die Patenterteilung: **24.10.2007**
(21) Anmeldenummer: 05008451.6
(22) Anmeldetag: 19.04.2005
(51) Int. Cl.: F02D 41/26

(54) **Erweiterbares Steuergerät**
Extendable control device
Dispositif de commande élargible

(30) Priorität: 07.05.2004 DE 102004022614
(43) Veröffentlichungstag der Anmeldung: 09.11.2005
(73) Patentinhaber: DaimlerChrysler AG, 70327 Stuttgart (DE)
(72) Erfinder: Mayer, Werner, 70736 Fellbach (DE); Strud, Hans-Jörg, 73776 Altbach (DE); Weber, Stefan, 72631 Aichtal (DE)

(56) Entgegenhaltungen:
- EP-A- 0 801 351
- EP-A- 1 267 232
- DE-A1- 3 612 416
- US-A- 5 576 642

## Beschreibung

Die Erfindung betrifft ein erweiterbares Steuergerät zur Steuerung von Komponenten in einem Verkehrsmittel mit einem Mikrorechner, einem Hauptspeichermittel und Ein-/Ausgabeschnittstellen zur Ankopplung von externen Sensoren und/oder Aktoren. Zur Adressierung von Daten ist ein interner Datenbus vorgesehen. Zur Erweiterung der Datenverarbeitungskapazität des Mikrorechners ist eine Schaltung, beispielsweise eine Speichererweiterung, am Steuergerät anschließbar.

Heute werden Steuergeräte im Verkehrsmittel, beispielsweise zur Steuerung eines Verbrennungsmotors, eingesetzt. Die Steuergeräte weisen einen Mikrorechner, beispielsweise einen Mikrocontroller mit integriertem Programm- und Datenspeicher (RAM, ROM), als Hauptdatenspeicher auf. Zur Ansteuerung von Sensoren und Aktoren sind ein AD-Wandler, Ein- und Ausgabeschnittstellen, Timereinheiten und Datenbus-Interfaces notwendig. Derartige Mikrorechner sind bzgl. ihrer Leistungsfähigkeit, der Programmspeichergröße und der Ein-/Ausgabefunktionalität, beispielsweise Anzahl der Input/Output-Ports, der AD-Wandlerkanäle, der Timerkanäle oder serieller Schnittstellen, auf den jeweiligen Verbrennungsmotor abgestimmt. Da die Verbrennungsmotoren mit höherer Zylinderzahl, beispielsweise 8- oder 12-Zylinder, zwar rechenintensiver sind als jene kleineren Verbrennungsmotoren, jedoch in geringerer Stückzahl hergestellt werden, sind die meisten Steuergeräte für Verbrennungsmotoren auf 4- und 6-Zylindermotoren abgestimmt.

Daher stoßen Steuergeräte bei Verbrennungsmotoren mit größerer Zylinderzahl schnell an ihre Datenverarbeitungsgrenze.

Durch neue Verbrennungskonzepte, beispielsweise die Benzin-Direkteinspritzung, die Kompressoraufladung, Abgasnachbehandlungen oder Hybridantrieb sind in dem Steuergerät für Verbrennungsmotoren zusätzliche Steuer- und Regelfunktionen umzusetzen, durch die die Datenverarbeitungsgrenze des Mikrorechners im Steuergerät überschritten wird. Eine Möglichkeit, die hohe Datenverarbeitungsleistung zu bewältigen, besteht darin, bestimmte Rechenaufgaben auf ein weiteres Steuergerät auszulagern. Wegen des zwischengeschalteten Datenbusbetriebs führt dies aber regelmäßig zu Störungen im Echtzeitbetrieb, so dass hier nach anderen Lösungen gesucht wird.

Die DE 197 50 662 C2 zeigt ein Steuergerät für ein Verkehrsmittel mit einem ersten Mikrorechner zur Ausführung von Steuerungsaufgaben und einem Kommunikations-Coprozessor zur Umsetzung der Datenformate eines ersten Datenbusses in die Datenformate eines zweiten Datenbusses. Der Kommunikations-Coprozessor sorgt für die Abarbeitung der rechenintensiven Gateway-Funktionalität, ohne dabei den Mikrorechner selbst mit diesen Kommunikationsaufgaben zu belasten. Infolgedessen kann der Mikrorechner ausschließlich für die Steuerungsaufgaben im Verkehrsmittel eingesetzt werden. Eine nachträgliche Erweiterung des Steuergerätes ist dabei nicht vorgesehen. Vielmehr wird das Steuergerät für die maximale Datenverarbeitungsaufgabe ausgelegt und läuft bei weniger rechenintensiven Aufgaben im geringer ausgelasteten Bereich.

Die DE 197 14 963 A1 zeigt ein Steuergerät zur Ansteuerung eines Verbrennungsmotors. Eine am Steuergerät extern angeschlossene, digitale Logikschaltung empfängt die Kurbelwellen- und Nockenwellenimpulsabfolge des Verbrennungsmotors und der Mikrorechner des Steuergeräts bestimmt, welche Impulsabfolge als Bezug für die Brennstoffeinspritzung zu verwenden ist. An die externe Logikschaltung ist ausgangsseitig ein Sensor direkt angeschlossen. Die Logikschaltung liefert an das Steuergerät Sensorsignale und führt eine Datenvorverarbeitung durch. Die digitale Logikschaltung ist jedoch nicht über den internen Datenbus an das Steuergerät anschließbar, so dass auf Daten des Hauptspeichers in Echtzeit direkt zugegriffen werden kann. Auch sind keine Pegelwandler zur Anpassung der Spannungspegel der Daten des Mikrorechners an die Spannungspegel der externen Schaltung offenbart.

Die DE 101 60 476 A1 zeigt ein Steuergerät, welches über einen Datenbus mit weiteren Steuergeräten innerhalb eines Verkehrsmittels vernetzt ist. Im Steuergerät ist ein zweiter Mikrorechner als Mittel zur Berechnung von Steuerdaten vorhanden. Zwischen den beiden Mikrorechnern des Steuergeräts ist eine Schnittstelle vorhanden, die die Zeitdauer der Steuervorgänge erfasst, wobei das Zeitbestimmungsmittel beim Unter- bzw. Überschreiten eines Grenzwerts ein Grenzwertsteuersignal erzeugt, so dass durch einen der Mikrorechner eine Steuerfunktion in Echtzeit durchführbar ist.

Die DE 101 39 610 A1 offenbart eine universelle Rechnerarchitektur für ein Verkehrsmittel mit einem Mikroprozessor zur Abarbeitung von Steuerungsprogrammen. Der Rechner weist eine rekonfigurierbare Hardware auf, die im eingebauten Zustand des Rechners ein nachträgliches Umkonfigurieren von peripheren Komponenten oder einer Schnittstelle zulässt. Über eine Hardware-Beschreibungssprache wird ein Algorithmus zum Rekonfigurieren der Hardware auf das Steuergerät heruntergeladen, wodurch sich die Hardware entsprechend umkonfiguriert.

Die WO 03/065453 A1 zeigt eine Aufnahmevorrichtung für eine programmierbare, elektronische Verarbeitungseinrichtung. Diese ist in mindestens eine erste und zweite Funktionseinheit aufgeteilt, die insbesondere monolithisch integrierte Bauelemente darstellen. Die erste Funktionseinheit definiert alle Ein- und Ausgangsschnittstellen der gesamten Verarbeitungseinheit bzgl. ihrer elektrischen Eigenschaften. Alle wesentlichen Anschlüsse der zweiten Funktionseinheit sind von außen nur über die erste Funktionseinheit zugänglich. Die erste Funktionseinheit enthält hierzu Anpassschaltungen, die der elektrischen Anpassung der Anschlüsse der zweiten Funktionseinheit an die Außenbedingungen dienen.

EP 1 267 232 offenbart, wie ein Steuergerät für vier Zylinder durch Einsetzen eines externen ROMs auf sechs Zylinder erweitert wird.

Der vorliegenden Erfindung liegt die Aufgabe zugrunde, ein erweiterbares Steuergerät zur Steuerung von Komponenten in einem Verkehrsmittel bereitzustellen, welches einerseits zur Steuerung kleinerer Datenverarbeitungsaufgaben geeignet ist und mittels einer weiteren Schaltung auf sehr komplexe Datenverarbeitungsaufgaben anpassbar ist. Die Schaltung zur Erweiterung der Datenverarbeitungskapazität ist als Standardbaustein an das Steuergerät ankoppelbar, so dass sich eine einfache und modularisierte Erweiterungsmöglichkeit des Steuergeräts ergibt.

Die folgende Aufgabe wird durch die Merkmale des Anspruchs 1 gelöst. Danach weist das Steuergerät eine Schnittstelle auf, über die die Schaltung an den internen Datenbus ankoppelbar ist. Die Schaltung ist innerhalb eines Gehäuses mit Spannungsversorgung, Pegelwandler, Erweiterungsspeicher, Sensor/Aktor-Interface und logischer Verarbeitungseinheit gekapselt und der Pegelwandler ist zur Anpassung der Spannungspegel der Signale und/oder Daten des Mikrorechners an die Spannungspegel der Schaltung vorgesehen. Die logische Verarbeitungseinheit verarbeitet Daten des Hauptspeichermittels weiter, über das Sensor-/Aktor-Interface sind Sensoren und/oder Aktoren an die Schaltung direkt ankoppelbar und die Schaltung ist innerhalb des Gehäuses als Multichip-Modul ausgeführt, wobei auf einem mit dem Gehäuse verbundenen Basischip die Spannungsversorgung, Pegelwandler und der interne Datenbus der Schaltung vorgesehen sind und wobei die Verarbeitungseinheit und/oder der Erweiterungsspeicher als separate Chips in die Schaltung einsetzbar bzw. austauschbar sind.

Der vorliegenden Erfindung liegt die Idee zugrunde, die für Motoren mit höherer Zylinderzahl gegenüber Motoren mit kleinerer Zylinderzahl zusätzlichen Bausteine, wie Programmspeicher, in Form von Read Only Memory(ROM), Random Access Memory(RAM), Flash-Speicher (FLASH), Magnetic Random Access Memory (MRAM), Ferroelectronic Random Access Memory (FRAM) usw., Analog-Digital-Wandler (ADC), programmierbare Logik, wie Field Programmable Gate Array(FPGA), Programmable Array Logic(PAL), Generic Array Logic (GAL), Programmable Logic Device (PLD), Complex Programmable Logic Device(CPLD) usw., Pegelwandler und Spannungsversorgungsschaltungen zu einem Multichip-Modul zu verbinden. Die programmierbare Logik dient als logische Verarbeitungseinheit und kann Aufgaben wie ein Mikrorechner durchführen. In der logischen Verarbeitungseinheit können Algorithmen wie eine Sensorsignalverarbeitung, Filterung, Kennfeldinterpolation oder Fouriertransformation durchgeführt werden. Die parallelen Strukturen der programmierbaren Logik sind dabei sehr schnell, was die Echtzeitfähigkeit bei derartigen Steuergeräten ermöglicht. Die logische Verarbeitungseinheit der Erweiterungsschaltung bietet auch die Möglichkeit, Rechnerkerne mit unterschiedlicher Rechenleistung nachzubilden und beispielsweise die Datenverarbeitungsvorgänge in unterschiedlicher Bearbeitungsbreite, wie 8, 16 oder 32 Bit, darzustellen. Der Programmcode und die Parameter für diese Rechnerkerne stehen dann im Erweiterungsspeicher der Schaltung zur Verfügung.

Das Multichip-Modul enthält einen monolithisch integrierten Basischip, in dem die Spannungsversorgung, Pegelwandler und interner Datenbus der Schaltung vorgesehen sind. Ferner können Buffer- und Interface-Schaltungen zusätzlich konfigurierbar sein, so dass die gängigsten Standards, beispielsweise Intel-, Motorola-Standards, für den internen Datenbus erfüllt werden. Über den Adressdatenbus können die Teilschaltungen in der Schaltung zur Erweiterung der Datenverarbeitungskapazität von dem Mikrorechner aus angesprochen werden. Die Schaltung verfügt außerdem über ein serielles Interface, über das die Teilschaltungen der Schaltung ebenso vom Mikrorechner aus angesprochen werden können. Die Schaltung ist kaskadierbar, d. h. es können mehrere Einheiten von einem Mikrorechner aus angesprochen werden. Die Auswahl der entsprechenden Schaltung zur Erweiterung der Datenverarbeitungskapazität erfolgt über eine spezielle Auswahlleitung, wie eine Chip-Select-Leitung. Über die Chip-Select-Leitung können mehrere dem Steuergerät zugeordnete Schaltungen zur Erweiterung der Datenverarbeitungskapazität jeweils ausgewählt werden, so dass eine Steuerungsaufgabe durchgeführt wird. Die Schaltung verfügt über eine Synchronisationsleitung zum Mikrorechner und dadurch kann die Schaltung mit dem Mikrorechner des Steuergeräts synchronisiert werden. Beispielsweise kann aber auch eine kurbelwinkelsynchrone Steuerung, bezogen auf die Kurbelwinkeldrehzahl des Verbrennungsmotors, erfolgen. Die Schaltung zur Erweiterung kann über Interrupt-Leitungen Ereignisse an das Steuergerät weitermelden.

Die Pegelwandler dienen zur Anpassung der Signalpegel von den als eigenständigen Bausteinen ausgebildeten Teilschaltungen der Erweiterungsschaltung. Dabei können Signalpegel einer logischen Verarbeitungseinheit, von Speichern oder AD-Wandlern auf die Spannungspegel des Mikrorechners angepasst werden. Die Pegelanpassung ist notwendig, da die genannten eigenständigen Bausteine in einer für ihre Funktion optimalen Technologie und der damit verbundenen optimalen Spannungsversorgung ausgeführt sind. Bei einer programmierbaren Logik kann dies eine Versorgungsspannung von beispielsweise 1,2 V sein, bei nichtflüchtigen Speichern kann eine Spannungsversorgung bei 3,3 V liegen und bei AD-Wandlern kann eine Spannungsversorgung von 5 V erforderlich sein. Die Pegelwandler haben die Aufgabe, die unterschiedlichsten Signalpegel der eigenständigen Bausteine innerhalb der Schaltung zur Erweiterung der Datenverarbeitungskapazität auf einen einheitlichen Signalpegel innerhalb der Schaltung zu wandeln. Die Pegelwandler können in Richtung interner Adressdatenbus bzw. in Richtung zum Flash-Datenspeicher in einen Tristate-Mode geschalten werden. Dabei können verschiedene Spannungspegel je nach Übertragungsrichtung vorgesehen sein. Die Pegelwandler verfügen über zwei Spannungsversorgungen. Über die Versorgungsspannung für die Eingangsschaltung wird insbesondere der Signalpegel für die Versorgung der Einzelchips, wie nichtflüchtige Speichermittel, AD-Wandler, Überwachungseinheit, programmierbare Logik, definiert. Ausgangsseitig werden die Pegelwandler an die Versorgungsspannung des Basischips der Schaltung angeschlossen. Dadurch ist eine Anpassung der Signalpegel zwischen Pegelwandler und Mikrocontroller-Interface gewährleistet.

Da auch auf der Mikrorechnerseite im Steuergerät die Signalpegel von Mikrorechner zu Mikrorechner variieren können, sind für den Basischip der Erweiterungsschaltung zwei Versorgungsspannungen vorgesehen. Mit der ersten Versorgungsspannung werden die Ein- und Ausgangsstufen von Adressdatenbus oder die serielle Schnittstelle zum Mikrocontroller versorgt. Diese Spannungsversorgung ist üblicherweise identisch mit der Versorgung der entsprechenden Schnittstellen im Mikrorechner. Mit der zweiten Versorgungsspannung wird der Basischip selbst spannungsversorgt. Das heißt, auch hier erfolgt die Anpassung der Spannungssignalpegel durch die Versorgungsspannung.

Jeder Einzelchip, beispielweise jeder nichtflüchtige Speicher, AD-Wandler, jede Überwachungseinheit, programmierbare Logik, und das Mikrocontroller-Interface erhalten eine individuelle Versorgungsspannung. Diese Versorgungsspannungen können entweder von außen über die Versorgungspins zugeführt oder intern aus der Hauptversorgung der Schaltung zur Erweiterung generiert werden. Bei der internen Generierung sind die Spannungsregler einstellbar, so dass praktisch jede denkbare Versorgungsspannung für die Einzelchips zur Verfügung gestellt werden kann. Die Versorgungsspannungen können dabei in einem Bereich von 1 bis 5 V liegen. Ein Teil der Komponenten, bei der Verwendung eines Schaltreglers oder Linearreglers, können dabei extern an die Schaltung zur Erweiterung angeschlossen werden.

Die Schaltung zur Erweiterung kann eine Überwachungseinheit auf dem Basischip aufweisen. Die Überwachungseinheit kann als Zustandsautomat vorgesehen sein oder als kleiner Mikrorechner, der einzelne Programmabläufe überwacht.

Der Erweiterungsspeicher und die logische Verarbeitungseinheit können bei einer Ausführungsform in einer von dem Basischip der Schaltung abweichenden Halbleitertechnologie hergestellt sein. Die dadurch abweichenden Spannungspegel sind dann über die Pegelwandler an den Spannungspegel des Basischips anpressbar. Die logische Verarbeitungseinheit der Schaltung ist bevorzugt bei der Sensorsignalverarbeitung, einer Kennfeldinterpolation oder eine Fouriertransformation einsetzbar.

Der Erweiterungsspeicher und die logische Verarbeitungseinheit sind vom Mikrorechner des Steuergeräts über den Adressdatenbus der Schaltung ansprechbar. Der Adressdatenbus kann entweder fest verdrahtet sein oder auf dem Basischip der Schaltung über nichtflüchtige Speicher, eine Überwachungseinheit oder die programmierbare Logik realisiert sein. Die Funktionalität des Adressdatenbusses kann vom Anwender flexibel in der programmierbaren Logik in Form einer Buseinheit oder einer Bus-Bridge programmiert werden.

Die Schaltung kann für die Konfiguration von RAM-Speicherzellen mit einer darauf angeordneten programmierbaren Logik, beispielsweise einem Field Programmable Gate Array, als eigenständiger Chip vorgesehen sein. Zur Konfiguration kann ein ROM-Speichermittel in der Schaltung vorhanden sein, so dass die Hardware-Beschreibungssprache oder die Konfigurationsdaten in den Erweiterungsspeicher der Schaltung geladen werden können, um die programmierbare Logik der logischen Verarbeitungseinheit zu konfigurieren.

Die Schaltung zur Erweiterung der Datenverarbeitungskapazität weist nichtflüchtige Speichermittel, AD-Wandler, eine Überwachungseinheit und eine programmierbare Logik zur Verarbeitung der Daten auf. Jede der genannten Schaltungen kann auch mehrfach vorhanden sein. Drei Schaltungen innerhalb der Erweiterungsschaltung liegen beispielsweise als Einzelchips vor und werden über geeignete Gehäuse bzw. Schaltungsmodule innerhalb des Multichip-Moduls zu einer integrierten Schaltung vernetzt. Es ist auch möglich, mehrere Teilschaltungen auf einem Chip monolithisch zu integrieren.

Die Schaltung zur Erweiterung verfügt über den Adressdatenbus, der mittels Daten eines Speichermittels konfigurierbar ist und die gängigen Standards für Adressdatenbusse erfüllt. Über den Adressdatenbus können Teilschaltungen in der Schaltung zur Erweiterung von dem Mikrorechner des Steuergeräts aus direkt angesprochen werden. Die Schaltung zur Erweiterung verfügt über ein serielles Interface, über das Teilschaltungen vom Mikrorechner aus ansprechbar sind.

Der Basischip der Schaltung zur Erweiterung kann auch als Chip auf einem Keramikträger, beispielsweise LTCC, zusammen mit der Schaltung zur Erweiterung verbaut werden. Die Verbindung zwischen den einzelnen Chips und zur Peripherie kann dann über eine Bonding-Verbindung erfolgen. Der Basischip kann auch als Baustein auf einer Platine zusammen mit einer Programmspeichererweiterung, einer Analog-Digital-Wandlereinheit und einer Überwachungseinheit verbaut werden. Die Verbindung zwischen den einzelnen Bausteinen und zur Peripherie kann dann über eine Leiterbahn erfolgen.

Vorteilhafte Ausführungsformen der Erfindung sind in den Zeichnungen dargestellt und werden nachfolgend beschrieben. Hierbei zeigt:

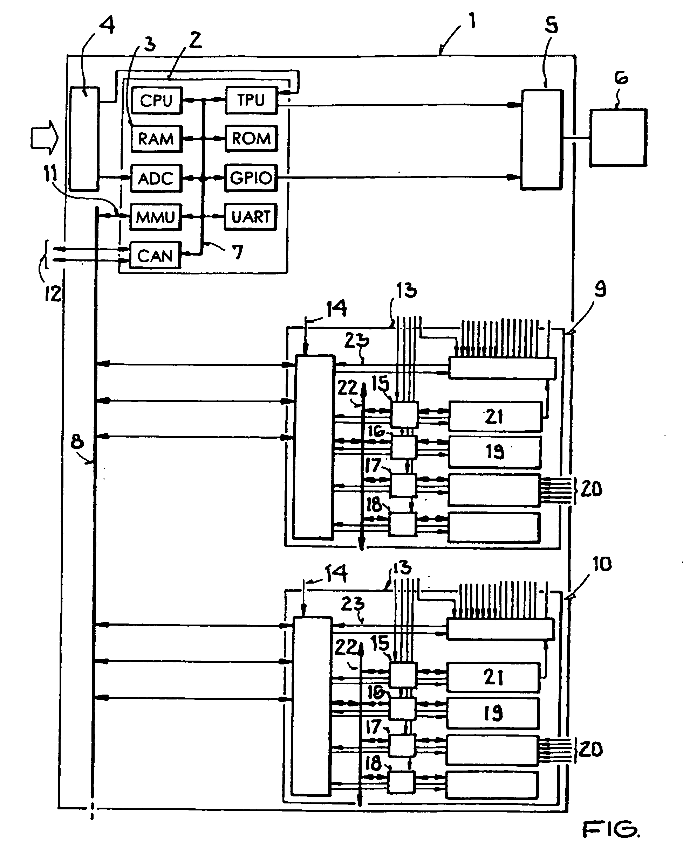

- Fig. 1: eine Ansicht eines erfindungsgemäßen Steuergeräts mit zwei Schaltungen zur Erweiterung der Datenverarbeitungskapazität.

Das erweiterbare Steuergerät 1 ist als Motor- oder Getriebesteuergerät bei einem Verkehrsmittel vorgesehen und weist einen Mikrorechner 2, ein Hauptspeichermittel 3 in Form eines Random Access Memory (RAM) und eines Read Only Memory (ROM) auf. Zur Ankopplung von externen Sensoren und/oder Aktoren 6 sind Ein-/Ausgabeschnittstellen 4, 5 vorgesehen. Zur Ankopplung der Aktoren sind Endstufen 5 vorgesehen. Der Mikrorechner 2 weist Analog-Digital-Wandler (ADC) und eine programmierbare Schnittstelle (GPIO) auf. Das Steuergerät 1 verfügt zusätzlich über eine Schnittstelle zur Ankopplung eines externen Fahrzeug-Datenbusses 12 an das Steuergerät 1. Dadurch kann das Steuergerät 1 mit weiteren Steuergeräten im Verkehrsmittel vernetzt werden. Als Fahrzeug-Datenbus 12 ist bspw. ein Controller Area Network (CAN) vorgesehen. Zusätzlich zum CAN-Datenbus 12 weist das Steuergerät 1 einen internen Datenbus 7 und einen internen Steuergeräte-Datenbus 8 auf, um Daten innerhalb des Steuergeräts mit den verschiedenen Schaltungsteilen auszutauschen. An einer Schnittstelle 11 des Steuergeräts 1 können mehrere Erweiterungsschaltungen 9, 10 an den internen Datenbus 7 und den internen Steuergeräte-Datenbus 8 des Steuergeräts 1 angekoppelt werden.

Die Schaltung 9 zur Erweiterung der Datenverarbeitungskapazität weist eine Spannungsversorgung 14 mit einem Interface zur Ankopplung an das Steuergerät 1 auf. Das Interface ist zum Anschluss des internen Steuergeräte-Datenbusses 8 und des Datenbusses 7 an die Schaltung 9 vorgesehen. Über den Adressdatenbus 22 der Schaltung 9 kann dann vom Mikrorechner 2 aus jede Teilschaltung innerhalb der Schaltung 9 angesprochen werden. Die Schaltung 9 verfügt über mehrere Pegelwandler 15 bis 18, die die eingehenden Signale vom Steuergerät 1, bezogen auf deren Spannungspegel, so wandeln, dass eine logische Verarbeitungseinheit 21, ein Erweiterungsspeicher 19 oder das Sensor-Aktor-Interface 20 der Schaltung 9 vom Mikrorechner 2 des Steuergeräts 1 aus ansprechbar sind. Die Schaltung 9 weist interne Datenleitungen 23 auf, um die vom Mikrorechner 2 zur Schaltung 9 übertragenen Daten der logischen Verarbeitungseinheit 21 oder dem Erweiterungsspeicher 19 zuzuführen. Die logische Verarbeitungseinheit 21 bearbeitet die vorgegebenen Daten mittels eines Algorithmus derart weiter, dass ein über ein Sensor-Aktor-Interface 20 direkt an die Schaltung 9 eingeschlossener Aktor entsprechend ansteuerbar ist. Eine weitere Schaltung 10 zur Erweiterung der Datenverarbeitungskapazität des Steuergeräts 1 ist in einem separaten Gehäuse vorgesehen und die Schaltung 10 ist analog zur Schaltung 9 aufgebaut. Auf der logischen Verarbeitungseinheit 21 der Schaltung 10 ist jedoch ein anderer Algorithmus hinterlegt, so dass über das Sensor-Aktor-Interface 20 der Schaltung 10 ein anderer Aktor angesteuert werden kann als mit der Schaltung 9.

Die Erweiterungsschaltungen 9 und 10 sind als Multichip-Module ausgeführt, so dass auf einen Basischip unterschiedliche Schaltungen aufsetzbar und ansteuerbar sind. Die Erweiterungsschaltungen ermöglichen einerseits mit einem Standardmodul Steuergeräte zu erweitern, wodurch eine Skalierbarkeit, d. h. eine datenverarbeitungsmäßig höhere Rechenkapazität, möglich wird, ohne dass ein weiteres Steuergerät erforderlich ist. Andererseits können aber auch mit den Schaltungen 9 und 10 elektrische Schaltungen nachgebildet und simuliert werden, so dass bei älteren Fahrzeugen eine Elektronik als Ersatzteil nachgebildet werden kann, obwohl die Mikrorechner 2 durch die Industrie nicht mehr lieferbar sind.

## Patentansprüche

1. Erweiterbares Steuergerät zur Steuerung von Komponenten in einem Verkehrsmittel, mit einem Mikrorechner (2), einem Hauptspeichermittel (3) und Ein-/Ausgabeschnittstellen (4, 5) zur Ankopplung von externen Sensoren und/oder Aktoren (6), wobei im Mikrorechner (2) zur Übertragung von Adressen und/oder Daten ein interner Datenbus (7), zur Vernetzung mit weiteren Steuergeräten zusätzlich ein externer Fahrzeugdatenbus (12) und zur Erweiterung der Datenverarbeitungskapazität des Mikrorechners (2) eine Schaltung (9, 10) vorgesehen ist,
**dadurch gekennzeichnet, dass**
der Mikrorechner (2) eine Schnittstelle (11) aufweist, über die die Schaltung (9, 10) an den internen Datenbus (7) ankoppelbar ist, dass die Schaltung (9, 10) innerhalb des Steuergerätes (1) auf einer Leiterplatte mit Spannungsversorgung (14), Pegelwandler (15 - 18), Erweiterungsspeicher (19), Sensor/Aktor-Interface (20) und logischer Verarbeitungseinheit (21) vorgesehen ist, dass die Pegelwandler (15 - 18) zur Anpassung der Spannungspegel der Signale und/oder Daten der unterschiedlichen Komponenten der Schaltung (9, 10) vorgesehen sind und dass die logische Verarbeitungseinheit (21) eingerichtet ist, vom Mikrorechner (2) kommende Daten weiterzuverarbeiten, und dass über das Sensor/Aktor-Interface (20) Sensoren und/oder Aktoren an die Schaltung (9, 10) direkt ankoppelbar sind, dass die Schaltung (9, 10) als Multichip-Modul ausgeführt ist, wobei auf einem mit dem Gehäuse (13) verbundenen Basischip die Spannungsversorgung und Schnittstellen zum Mikrorechner (2) der Schaltung als H Monolith vorgesehen sind und dass die logische Verarbeitungseinheit (21) und/oder der Erweiterungsspeicher (19) als separate Chips in die Schaltung (9, 10) einsetzbar sind.

2. Steuergerät nach Anspruch 1,
**dadurch gekennzeichnet, dass**
der Erweiterungsspeicher (19) und die logische Verarbeitungseinheit (21) in einer von dem Basischip abweichenden Halbleitertechnologie hergestellt sind, dadurch vom Basischip abweichende Spannungspegel aufweisen, die durch die Pegelwandler (15 bis 18) an die Spannungspegel des Basischips anpassbar sind.

3. Steuergerät nach Anspruch 1,
**dadurch gekennzeichnet, dass**
es als Motor-/Getriebesteuergerät ausgeführt ist.

4. Steuergerät nach einem der Ansprüche 1 bis 3,
**dadurch gekennzeichnet, dass**
die logische Verarbeitungseinheit (21) eine Sensorsignalverarbeitung, eine Kennfeldinterpolation oder eine Fouriertransformation durchführt.

5. Steuergerät nach einem der Ansprüche 1 bis 4,
**dadurch gekennzeichnet, dass**
die logische Verarbeitungseinheit eine programmierbare Logikschaltung, FPGA, PAL, GAL, PLD, CPLD, ist, die durch Herunterladen einer Hardware-Programmiersprache programmierbar ist.

6. Steuergerät nach Anspruch 1,
**dadurch gekennzeichnet, dass**
der Erweiterungsspeicher (19) und die logische Verarbeitungseinheit (21) vom Mikrorechner (2) des Steuergerätes (1) über den Adressdatenbus (22) der Schaltung (9, 10) ansprechbar sind.

7. Steuergerät nach einem der Ansprüche 1 bis 6,
**dadurch gekennzeichnet, dass**
über die programmierbare Logikschaltung (21), FPGA, PAL, GAL, PLD, CPLD, Kommunikationskanäle der Module (19) und (20) der Schaltung (9, 10) flexibel programmierbar sind.

8. Steuergerät nach einem der Ansprüche 1 bis 7,
**dadurch gekennzeichnet, dass**
die programmierbare Logikschaltung (21) über eine direkte Verbindung vom Erweiterungsspeicher (19) zum Basischip verfügt, mittels derer der Erweiterungsspeicher (19) direkt vom Mikrorechner (2) programmierbar ist.

9. Steuergerät nach Anspruch 1,
**dadurch gekennzeichnet, dass**
bei mehrfach vorhandener Schaltung (9, 10) die Auswahl der entsprechenden Schaltung (9, 10) über spezielle Auswahlleitungen (Chip-Select-Leitungen) erfolgt, die vom Mikrorechner (2) angesteuert werden.

## Claims

1. Extendable control device for controlling components in a means of transport, having a microcomputer (2), a main storage means (3) and input / output interfaces (4, 5) for coupling of external sensors and / or actuators (6), whereby an internal data bus (7) is provided in the microcomputer (2) for transmission of addresses and / or data, in addition an external vehicle data bus (12) is provided for linking with further control devices and a circuit (9, 10) is provided for extending the data processing capacity of the microcomputer (2),
**characterised in that**
the microcomputer (2) comprises an interface (11), by means of which the circuit (9, 10) is adapted to be coupled to the internal data bus (7), **in that** the circuit (9, 10) is provided within the control device (1) on a printed circuit board with voltage supply (14), level converters (15 - 18), extended memory (19), sensor / actuator interface (20) and logical processing unit (21), **in that** the level converters (15 - 18) are provided for adapting the voltage level of the signals and / or data of the different components of the circuit (9, 10) and **in that** the logical processing unit (21) is adapted to further process data coming from the microcomputer (2) and **in that** by means of the sensor / actuator interface (20) sensors and / or actuators are adapted to be directly coupled to the circuit (9, 10), **in that** the circuit (9, 10) is designed as a multichip module, whereby on a base chip connected to the housing (13) the voltage supply and interfaces to the microcomputer (2) of the circuit are provided as a monolith and **in that** the logical processing unit (21) and / or the extended memory (19) can be inserted into the circuit (9, 10) as separate chips.

2. Control device according to claim 1,
**characterised in that**
the extended memory (19) and the logical processing unit (21) are produced in a semiconductor technology differing from the base chip, thereby have a voltage level differing from the base chip which can be adapted through the level converters (15 to 18) to the voltage level of the base chip.

3. Control device according to claim 1,
**characterised in that**
it is designed as an engine / gearbox control device.

4. Control device according to one of the claims 1 to 3,
**characterised in that**
the logical processing unit (21) carries out sensor signal processing, a characteristic field interpolation or a Fourier transformation.

5. Control device according to one of the claims 1 to 4,
**characterised in that**
the logical processing unit is a programmable logic circuit, FPGA, PAL, GAL, PLD, CPLD, which is adapted to be programmed by downloading a hardware programming language.

6. Control device according to claim 1,
**characterised in that**
the extended memory (19) and the logical processing unit (21) can be addressed by the microcomputer (2) of the control device (1) by means of the address bus (22) of the circuit (9, 10).

7. Control device according to one of the claims 1 to 6,
**characterised in that**
by means of the programmable logic switch (21), FPGA, PAL, GAL, PLD, CPLD, communication channels of the modules (19) and (20) of the circuit (9, 10) are flexibly programmable .

8. Control device according to one of the claims 1 to 7,
**characterised in that**
the programmable logic circuit (21) has a direct connection from the extended memory (19) to the base chip, by means of which the extended memory (19) can be directly programmed by the microcomputer (2).

9. Control device according to claim 1,
**characterised in that**
in the case of a circuit (9, 10) with a multiple presence, the choice of the corresponding circuit (9, 10) takes place by means of special selection lines (Chip Select Lines) which are controlled by the microcomputer (2).

## Revendications

1. Dispositif de commande évolutif pour la commande de composants dans un moyen de transport, comprenant un microcalculateur (2), des moyens (3) formant la mémoire principale et des interfaces d'entrée / de sortie (4, 5) servant au couplage de capteurs et / ou d'actionneurs externes (6) où, dans le microcalculateur (2), il est prévu un bus de données interne (7) servant à la transmission d'adresses et / ou de données, il est prévu, en outre, un bus de données externe (12) du véhicule servant à la gestion en réseau avec d'autres dispositifs de commande et, pour l'extension de la capacité de traitement de données du microcalculateur (2), il est prévu un circuit de commutation (9, 10),
**caractérisé**
**en ce que** le microcalculateur (2) présente une interface (11) par laquelle le circuit de commutation (9, 10) peut être couplé au bus de données interne (7),
**en ce que** le circuit de commutation (9, 10) est prévu à l'intérieur du dispositif de commande (1), sur une carte à circuit imprimé, en comprenant une alimentation en tension (14), des transducteurs de niveau (15 - 18), une mémoire d'extension (19), une interface (20) de capteurs / d'actionneurs et une unité de traitement logique (21),
**en ce que** les transducteurs de niveau (15 - 18) sont prévus pour l'adaptation des niveaux de tension des signaux et / ou des données des différents composants du circuit de commutation (9, 10), et
**en ce que** l'unité de traitement logique (21) est installée pour continuer à traiter des données venant du microcalculateur (2), et
**en ce que** des capteurs et / ou des actionneurs peuvent être couplés directement au circuit de commutation (9, 10), via l'interface (20) de capteurs / d'actionneurs,
**en ce que** le circuit de commutation (9, 10) est réalisé comme un module à puces multiples,
où, sur une puce de base connectée au boîtier (13), l'alimentation en tension et les interfaces reliant au microcalculateur (2) du circuit de commutation sont prévues comme un monolithe, et en ce que l'unité de traitement logique (21) et / ou la mémoire d'extension (19) peuvent être montées dans le circuit de commutation (9, 10), comme des puces séparées.

2. Dispositif de commande selon la revendication 1, **caractérisé en ce que** la mémoire d'extension (19) et l'unité de traitement logique (21) sont fabriquées dans une technologie des semiconducteurs s'écartant de la puce de base, par le fait que ces éléments présentent des niveaux de tension s'écartant de la puce de base, niveaux de tension qui peuvent être adaptés aux niveaux de tension de la puce de base, grâce aux transducteurs de niveau (15 à 18).

3. Dispositif de commande selon la revendication 1, **caractérisé en ce qu'**il est réalisé comme un calculateur électronique du moteur / de la boîte de vitesses.

4. Dispositif de commande selon l'une quelconque des revendications 1 à 3, **caractérisé en ce que** l'unité de traitement logique (21) exécute un traitement des signaux des capteurs, une interpolation cartographique ou une transformation de Fourier.

5. Dispositif de commande selon l'une quelconque des revendications 1 à 4, **caractérisé en ce que** l'unité de traitement logique est un circuit logique programmable - pour des logiques du type FPGA, PAL, GAL, PLD, CPLD - qui peut être programmé par téléchargement d'un langage de programmation machine.

6. Dispositif de commande selon la revendication 1, **caractérisé en ce que** la mémoire d'extension (19) et l'unité de traitement logique (21) peuvent être sollicitées par le microcalculateur (2) du dispositif de commande (1), via le bus de données d'adresses (22) du circuit de commutation (9, 10).

7. Dispositif de commande selon l'une quelconque des revendications 1 à 6, **caractérisé en ce que** des canaux de communication des modules (19) et (20) du circuit de commutation (9, 10) peuvent être programmés de manière souple, via le circuit logique programmable (21), pour des logiques du type FPGA, PAL, GAL, PLD, CPLD.

8. Dispositif de commande selon l'une quelconque des revendications 1 à 7, **caractérisé en ce que** le circuit logique programmable (21) dispose d'une connexion directe entre la mémoire d'extension (19) et la puce de base, connexion directe grâce à laquelle la mémoire d'extension (19) est programmable directement par le microcalculateur (2).

9. Dispositif de commande selon la revendication 1, **caractérisé en ce que**, lorsque le circuit de commutation (9, 10) est présent en étant multiple, le choix du circuit de commutation correspondant (9, 10) est réalisé par des lignes de sélection spécifiques (lignes de sélection des puces) qui sont pilotées par le microcalculateur (2).
